(19) Europäisches Patentamt
European Patent Office
Office européen des brevets

(11) **EP 3 628 485 A1**

(12) **EUROPEAN PATENT APPLICATION**
published in accordance with Art. 153(4) EPC

(43) Date of publication:
**01.04.2020 Bulletin 2020/14**

(21) Application number: **18823490.0**

(22) Date of filing: **25.06.2018**

(51) Int Cl.:
*B32B 25/10* (2006.01)   *B32B 7/12* (2006.01)
*B32B 5/02* (2006.01)   *B32B 37/12* (2006.01)
*B32B 38/04* (2006.01)   *B60C 9/20* (2006.01)
*B60C 9/02* (2006.01)   *B60C 9/22* (2006.01)

(86) International application number:
**PCT/KR2018/007136**

(87) International publication number:
**WO 2019/004666 (03.01.2019 Gazette 2019/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2017 KR 20170083785
21.06.2018 KR 20180071516**

(71) Applicant: **Kolon Industries, Inc.
Seoul 07793 (KR)**

(72) Inventors:
• **KIM, Da Ae**
  **Seoul 07793 (KR)**
• **JEON, Ok Hwa**
  **Seoul 07793 (KR)**
• **LEE, Min Ho**
  **Seoul 07793 (KR)**
• **CHOI, Song Yeun**
  **Seoul 07793 (KR)**
• **YIM, Jong Ha**
  **Seoul 07793 (KR)**

(74) Representative: **Ter Meer Steinmeister & Partner
Patentanwälte mbB
Nymphenburger Straße 4
80335 München (DE)**

(54) **WEIGHT-REDUCED RUBBER REINFORCEMENT MATERIAL, MANUFACTURING METHOD THEREFOR, AND TIRE COMPRISING SAME**

(57) One embodiment of the present invention provides a rubber reinforcement material which comprises a fiber substrate, an adhesive layer disposed on the fiber substrate, a rubber compound layer disposed on the adhesive layer, and resorcinol-formaldehyde-latex (RFL), wherein the rubber compound layer has a thickness of 5 $\mu$m to 200 $\mu$m.

【FIG. 2】

Printed by Jouve, 75001 PARIS (FR)

EP 3 628 485 A1

## Description

**[Technical Field]**

The present invention relates to a weight-reduced rubber reinforcing material capable of reducing the weight of a tire, a method for preparing the same, and a tire including such a rubber reinforcing material.

**[Background Art]**

Fiber type reinforcing material containing synthetic fibers such as polyester fiber represented by polyethylene terephthalate (PET), polyamide fiber represented by nylon, aromatic polyamide fiber, polyvinyl alcohol fiber, and the like are used as a rubber reinforcing material applied to rubber structures such as tires, belts and hoses,

Recently, as the performance of an automobile and road condition is improved, the driving speed is getting higher. Thus, it is necessary to maintain the stability and durability of the tire even during a high speed driving. For this purpose, lots of studies are made about a tire cord to be used as a reinforcement for a tire rubber. In addition, recently, in consideration of energy problems, fuel efficiency and environmental problems, there is a demand for a tire that is light and excellent in durability.

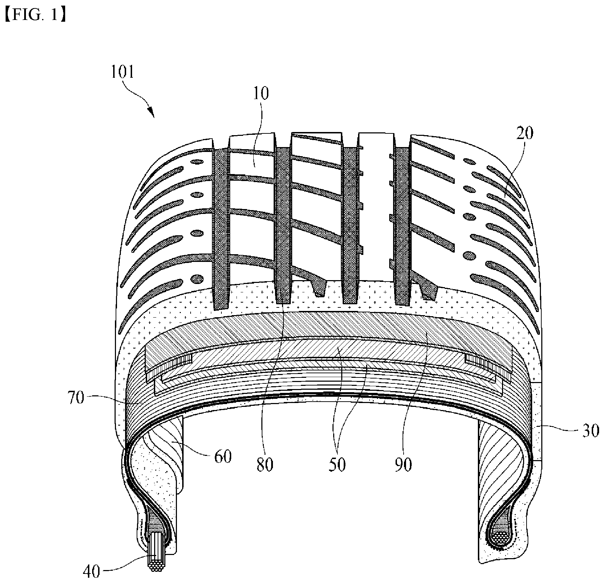

A tire cord is classified depending on used part and role and is divided into a carcass portion to support the entire tire, a belt portion to support the load and to prevent any deformation that might be caused when a high speed driving is made, and a cap ply portion to prevent any deformation of the belt portion (see FIG. 1). In particular, as the driving speed is getting higher due to the improvement of the highway conditions, the belt portion of the tire cord is deformed, thereby causing the degradation of the riding quality. Thus, the cap ply portion to prevent the deformation of the belt portion is getting more important.

Materials used for the belt, carcass and cap ply include, for example, nylon, rayon, aramids and polyesters including PET.

Of them, nylon is used for tires of various sizes since it is less expensive and has excellent adhesion performance and higher adhesiveness both before and after fatigue compared to other materials. One of the major functions of the cap ply is to support the belt during high speed driving. The nylon has high shrinkage stress and thus exhibits excellent performance for supporting the belt during high speed driving. However, the nylon has drawbacks as a material for a cap ply in that a flat spot might be caused due to its low modulus and high changeability between room temperature and high temperature.

The aramid has a lower shrinkage stress, superior creep property and very high modulus as compared with nylon. Also, it exhibits small variation in modulus of aramid under room temperature and high temperature, and thus, when aramid is used, it causes little flat spot phenomenon in tires even after long-term parking. While such aramid has been used for the high-class tires for which the quality of tire is very important, it is difficult to apply to general-purpose tires due to high costs. Furthermore, since the aramid has a high modulus which makes it difficult to expand the tire during the tire forming and vulcanizing processes, it is hard to apply the aramid to the general tires. It has also a disadvantage in that its elongation at break is too low to secure long-term durability.

To compensate for the aforementioned drawbacks, a plied twisted yarn of a hybrid structure has been developed which comprises both nylon and aramid. When such plied twisted yarn is used, it can solve the expansion-related problem during the tire-manufacturing process and the fatigue durability problem.

Tire cords composed of fibers such as nylon, rayon, aramid, PET, polyester or hybrid plied twisted yarn are generally rolled together with rubber component for adhesion to rubber. That is, a rolling process is involved in the tire manufacturing process. By the way, when the rolling process for the adhesion of a tire cord and rubber is applied in the tire manufacturing process, process costs increase, and the density of the tire increases more than necessary by rolling, thereby unnecessarily increasing the weight of the tire.

In the process of rolling rubber on tire cords, solid rubber is generally used. The product formed by the rolling of such rubber is difficult to make in a thin film of $200\mu$m or less. When these products are used as reinforcements, the thickness and weight of the tires increase.

On the other hand, recently, tire manufacturers attempt to reduce the thickness of the rubber layer in order to reduce the weight of the tire and the weight of the reinforcement material. Rolling Resistance (R/R) is related to the weight of the tire, and has a significant impact on the fuel consumption and carbon dioxide emissions of a vehicle. For example, the larger the rolling resistance (R/R), the higher the energy required for driving the vehicle. In addition, the resistance to rotation, tilting and acceleration of the vehicle is closely related to the weight of the vehicle. Consequently, research is also underway to reduce the weight of the vehicle by reducing the tire weight, thereby reducing the energy consumption.

Therefore, there is a need to develop a tire cord exhibiting excellent adhesion to rubber while having a thin thickness.

**[DETAILED DESCRIPTION OF THE INVENTION]**

**[Technical Problem]**

The present invention has been designed to solve the limitations and problems of the related art as described above.

One aspect of the present invention is to provide a rubber reinforcing material having excellent tackiness and excellent adhesion to rubber.

Another aspect of the present invention is to provide a rubber reinforcing material having a thin thickness but capable of exhibiting excellent performance as a tire reinforcing material.

Another aspect of the present invention is to provide a rubber reinforcing material that can contribute to the thickness of the rubber layer and the weight reduction of the tire.

Another aspect of the present invention is to provide a rubber reinforcing material having a thin rubber compound layer, which is difficult to achieve through a rolling process using a rubber in a solid state.

Yet another aspect of the present invention is to provide a method for producing such a rubber reinforcing material and a tire including such a rubber reinforcing material.

Yet another aspect of the present invention is to provide a weight-reduced tire.

The aspects of the present invention described above as well as other features and advantages of the present invention will be described in the following or will be clearly understood by those skilled in the art from the description.

**[Technical Solution]**

In order to achieve that the above objects, an embodiment of the present invention provide a rubber reinforcing material which comprises a fiber substrate, an adhesive layer disposed on the fiber substrate, and a rubber compound layer disposed on the adhesive layer, wherein the rubber compound layer has a thickness of 5$\mu$m to 200$\mu$m.

The rubber compound layer may have a thickness of 5$\mu$m to 30$\mu$m.

The rubber compound layer is formed from a rubber compound solution, and the rubber compound solution contains 10 to 40% by weight of an elastomeric composition and 60 to 90% by weight of a solvent based on the total weight of the rubber compound solution.

The elastomeric composition includes at least one elastomeric polymer selected from natural rubber, styrene butadiene rubber, butadiene rubber, chloroprene rubber, isobutylene rubber, isoprene rubber, nitrile rubber, butyl rubber and neoprene rubber.

The solvent includes at least one selected from toluene, naphtha, methanol, xylene and tetrahydrofuran.

The adhesive layer includes resorcinol-formaldehyde-latex (RFL).

The fiber substrate includes at least one of a fiber yarn and a textile substrate.

The textile substrate is a fabric formed by weaving fiber yarns.

The rubber reinforcing material has an adhesive force of 3N/inch or more.

Another embodiment of the present invention provides a method for producing a rubber reinforcing material including a step of preparing a textile substrate, a step of forming an adhesive layer on the textile substrate, and a step of applying a rubber compound solution onto the adhesive layer and performing heat treatment to form a rubber compound layer on the adhesive layer, wherein the rubber compound solution contains 10 to 40% by weight of an elastomeric composition and 60 to 90% by weight of a solvent based on the total weight of the rubber compound solution.

The rubber compound layer has a thickness of 5 $\mu$m to 200 $\mu$m. More specifically, the rubber compound layer may have a thickness of 5 $\mu$m to 30 $\mu$m.

The step of preparing a textile substrate includes a step of weaving fiber yarns to produce a textile substrate.

The method for producing a rubber reinforcing material further includes a step of slitting after forming the rubber compound layer.

Another embodiment of the present invention provides a tire including the aforementioned rubber reinforcing material.

The rubber reinforcing material is applied to at least one of a cap ply, a belt and a carcass of the tire.

The general description of the present invention as described above is only for illustrating or explaining the present invention, and is not intended to limit the scope of the present invention.

**[Advantageous Effects]**

Since the rubber reinforcing material according to one embodiment of the present invention has excellent adhesion to rubber, it can be strongly adhered to a rubber without going through a rolling process in the tire manufacturing process. According to the present invention, since the rubber reinforcing material is adhered to the rubber without going through the rolling process, the manufacturing cost of the tire is reduced, which prevents the density of the tire from being increased more than necessary and the weight of the tire from being unnecessarily increased due to the rolling.

When the rubber reinforcing material according to one embodiment of the present invention is used as tire cap ply, belt, carcass or the like, the rolling process can be omitted and thus, the manufacturing process of the tire can be simplified and the thickness and overall weight of the tire can be reduced. Further, the tackiness of the rubber reinforcing material is greatly increased. Thus, at the time of manufacturing a green tire, the air pocket is reduced and so the defective rate of the tire is reduced.

In addition, according to one embodiment of the present invention, it is possible to satisfy the needs of tire manufacturers who intend to reduce the thickness of the rubber layer in order to provide ultra-lightweight tire and lightweight reinforcing material. According to the present invention, the weight of the tire is reduced by the rubber reinforcing material having a thin thickness and excellent rubber reinforcement performance, thereby lowering rolling resistance (R/R), improving fuel efficiency of the vehicle, and lowering carbon dioxide emissions.

In particular, in the case of electric vehicles that use batteries, it is necessary to reduce the weight of the vehicle body in order to improve mileage and fuel consumption. When the lightweight tire reinforcement according to one embodiment of the present invention is applied, the weight reduction of the tire is made, the fuel economy and economic efficiency of the electric vehicle can be improved.

**[BRIEF DESCRIPTION OF THE DRAWINGS]**

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a partially cutaway view of a tire according to one embodiment of the present invention.
FIG. 2 is a schematic cross-sectional view of a rubber reinforcing material according to another embodiment of the present invention.
FIG. 3 is a schematic view of a plied twisted yarn.
FIG. 4 is a schematic cross-sectional view of a rubber reinforcing material according to another embodiment of the present invention.

**[DETAILED DESCRIPTION OF THE EMBODIMENTS]**

Hereinafter, embodiments of the present invention will be described with reference to the accompanying drawings.

Those skilled in the art will appreciate that various modifications, additions and substitutions are possible, without departing from the scope and spirit of the invention. Accordingly, the present invention includes all alternations and modifications that fall within the scope of inventions described in claims and equivalents thereto.

The shapes, sizes, ratios, angles, numbers, and the like illustrated in the accompanying drawings for describing the exemplary embodiments of the present invention are merely examples, and the present invention is not limited thereto. Like reference numerals generally denote like elements throughout the specification.

The terms such as "including," "having," and "consist of" used herein are generally intended to allow other components to be added unless the terms are used with the term "only". Any references to singular may include plural unless expressly stated otherwise. Components are interpreted to include an ordinary error range even if not expressly stated.

When the position relation between two parts is described using the terms such as "on", "above", "below", and "next", one or more parts may be positioned between the two parts unless the terms are used with the term "immediately" or "directly" is not used.

When the relation of a time sequential order is described using the terms such as "after", "continuously to", "next to", and "before", a case which is not continuous may be included unless the terms are used with the term "immediately" or "directly".

The term "at least one" should be understood to include all combinations which can be presented from one or more related items.

The features of various embodiments of the present disclosure can be partially or entirely bonded to or combined with each other and can be interlocked and operated in technically various ways, and the embodiments can be carried out independently of or in association with each other.

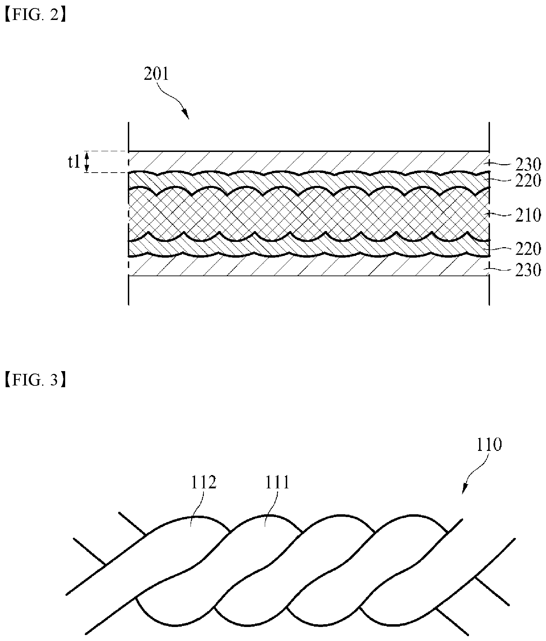

One embodiment of the present invention provides a tire 101 including rubber reinforcing materials 201 and 301 (see FIGS. 1 and 2).

FIG. 1 is a partially cutaway view of a tire 101 in accordance with one embodiment of the present invention.

Referring to FIG. 1, the tire 101 includes a tread 10, a shoulder 20, a side wall 30, a bead 40, a belt 50, an inner liner 60, a carcass 70, and a cap ply 90.

The tread 10 is a part which directly contacts the road surface. The tread 10 is a strong rubber layer attached to the outside of the cap ply 90, and is made of a rubber having excellent abrasion resistance. The tread 10 plays a direct role in transmitting the driving force and braking force of the vehicle to the ground. Grooves 80 are formed in the region of the tread 10.

The shoulder 20 is a corner portion of the tread 10 and is a portion connected to the side wall 30. Shoulder 20 is one of the weakest parts of the tire along with the sidewall (30).

The side wall 30 is a side portion of the tire 101 connecting a tread 10 and a bead 40, protects a carcass 70, and provides lateral stability to the tire.

Bead 40 is a region that contains an iron wire winding the end of the carcass 70, and has a structure in which the iron wire is covered with a rubber film to wrap the cord. The bead 40 serves to mount and secure the tire 101 to a wheel rim.

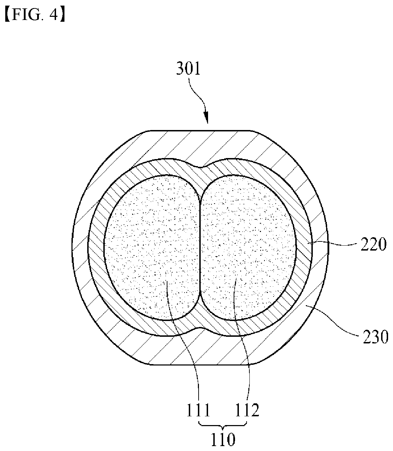

The belt 50 is a coat layer located between the tread 10 and the carcass 70. The belt 50 serves to prevent damage to internal components such as the carcass 70 due to external shocks or external conditions, and allows the shape of the tread 10 to keep flat so that the contact between the tire 101 and the road surface is maintained in an optimum state. The belt 50 may include rubber reinforcing materials 201 and 301 according to another embodiment of the present invention (see FIGS. 2 and 4).

Inner liner 60 is used in place of tubes in tubeless tires and is made of special rubber that has little or no air permeability. The inner liner 60 prevents the air filled in the tire 101 from leaking.

Carcass 70 is made by overlapping multiple sheets of cord papers made of strong synthetic fibers, and is an important part that forms the skeleton of the tire 101. The carcass 70 serves to withstand the load or impact received by the tire 101 and to maintain the air pressure. The carcass 70 may include a rubber reinforcing materials 201 and 301 according to another embodiment of the present invention.

Groove 80 refers to a thick void in the tread area. The groove 80 functions to increase drainage of the tire when driving on a wet road surface.

Cap ply 90 is a protective layer under the tread 10 and protects other components therein. The cap ply 90 is essentially applied to a vehicle traveling at high speed. In particular, as the traveling speed of the vehicle increases, problems such as deterioration of ride comfort due to deformation of the belt portion of the tire occur. Thus, the importance of the cap ply 90 to prevent deformation of the belt portion is increasing. Cap ply 90 may be made of rubber reinforcing materials 201 and 301 according to another embodiment of the present invention.

The tire 101 according to one embodiment of the present invention includes rubber reinforcing materials 201 and 301. The rubber reinforcing materials 201 and 301 may be applied to the cap ply 90 and may also be applied to at least one of the belt 50 and the carcass 70.

Other embodiments of the present invention provide rubber reinforcing materials 201 and 301. The rubber reinforcing materials 201 and 301 according to other embodiments of the present invention include fiber substrates 210 and 110, an adhesive layer 220 disposed on the fiber substrates 210 and 110, and a rubber compound layer 230 disposed on the adhesive layer 220.

The fiber substrate may be any of a fiber yarn and a textile substrate 210. The fiber yarn includes a plied twisted yarn 110.

FIG. 2 is a schematic cross-sectional view of a rubber reinforcing material 210 according to another embodiment of the present invention.

FIG. 2 illustrates that the textile substrate 210 is used as the fiber substrate of the rubber reinforcing material 201. However, another embodiment of the present invention is not limited thereto, and a fiber yarn may be used as the fiber substrate.

As the textile substrate 210, a fabric formed by weaving the fiber yarn may be used. As the fiber yarn, for example, a plied twisted yarn 110 formed by secondarily twisting two or more primary twist yarns 111 and 112 can be used (see FIG. 3). The fiber yarns may include at least one of nylon, rayon, aramid and polyester including PET.

According to another embodiment of the present invention, a fabric made using nylon, rayon, aramid and polyester including PET may be used as a textile substrate 210. For example, the textile substrate 210 may be made by weaving the plied twisted yarn 110 formed such that the primarily-twisted yarns 111 and 112 selected among nylon, rayon, aramid and polyester including PET are secondarily twisted.

According to another embodiment of the present invention, the plied twisted yarn 110 includes a hybrid plied twisted yarn formed such that two or more primarily-twisted yarns not identical to each other are secondarily twisted. Such hybrid plied twisted yarn may include, for example, nylon primarily-twisted yarn and aramid primarily-twisted yarn.

FIG. 3 is a schematic diagram of the plied twisted yarn 110.

Referring to FIG. 3, the plied twisted yarn 110 includes a first primarily twisted yarn 111 and a second primarily twisted yarn 112. The first primarily-twisted yarn 111 and the second primarily-twisted yarn 112 are secondarily twisted together. The first primarily-twisted yarn 111 has a first twist direction, the second primarily-twisted yarn 112 has a second twist direction, and the first primarily-twisted yarn 111 and the second primarily-twisted yarn 112 are secondarily twisted together in a third twist direction. Here, the second twist direction may be the same direction as the first twist direction, and the third twist direction may be opposite to the first twist direction. However, the twist direction is not limited thereto.

The first twist number and the second twist number may be the same as or different from each other. The first primarily-twisted yarn 111 and the second primarily-twisted yarn 112 may have, for example, a twist number of 150 to 500 TPM.

The first primarily-twisted yarn 111 and the second primarily-twisted yarn 112 may be the same as or different from each other. For example, the first primarily-twisted yarn 111 and the second primarily-twisted yarn 112 may be selected from nylon, rayon, aramid, and polyester including PET, respectively. The plied twisted yarn 110 may include, for example, a hybrid plied twisted yarn in which the first primarily-twisted yarn 111 is nylon and the second primarily-twisted yarn 112 is aramid.

According to another embodiment of the present invention, the adhesive layer 220 may include resorcinol-formaldehyde-latex. For example, the adhesive layer 220 may be formed by an adhesive coating solution containing resorcinol-formaldehyde-latex (RFL) and a solvent. However, the adhesive layer 220 according to one embodiment of the present invention is not limited thereto. The adhesive layer 220 may also include an epoxy compound layer and a resorcinol-formaldehyde-latex (RFL) layer disposed on the epoxy compound layer.

Resorcinol-formaldehyde-latex, also known as "RFL", acts as an adhesive. Resorcinol-formaldehyde-latex, in particular, improves the affinity and adhesion strength between the textile substrate 210, which is a fiber substrate, and the rubber component, improves the adhesion strength between the textile substrate 210 and the rubber compound layer 230 and improves the adhesion strength between the rubber reinforcing substrate 201 and the rubber. Consequently, the textile substrate 210 and the rubber compound layer 230 are stably attached without being separated from each other, and the occurrence of defects in the manufacturing process of the tire 101 is prevented. In addition, after the vulcanizing process, the rubber reinforcing material 201 and the rubber (e.g., tread, etc.) can be adhered together in the completed tire to maintain excellent adhesion.

The rubber compound layer 230 may be formed by a rubber compound solution containing an elastomeric composition and a solvent. The rubber compound solution may include 10 to 40% by weight of the elastomeric composition and 60 to 90% by weight of the solvent. The elastomeric composition contained in the rubber compound solution constitutes the rubber compound layer 230.

More specifically, in consideration of the volatilization of the solvent contained in the rubber compound solution, the rubber compound solution may include 10 to 30% by weight of the elastomeric composition and 70 to 90% by weight of the solvent. In this case, when the solvent is volatilized after preparing the rubber compound solution, the content of the elastomeric polymer included in the rubber compound solution may be 10 to 40% by weight.

The elastomeric composition may include 30 to 70% by weight of an elastomeric polymer and 30 to 70% by weight of an additive.

For example, the elastomeric composition may include at least one elastomeric polymer selected from natural rubber (NR), styrene butadiene rubber (SBR), butadiene rubber (BR), chloroprene rubber (CR), isobutylene rubber (IBR), isoprene rubber (IR), nitrile rubber (NBR), butyl rubber and neoprene rubber.

The additives may include additives used for forming the rubber compound, for example, carbon black, paraoil, zinc oxide, stearic acid, anti-aging agents, sulfur, vulcanization accelerators, active agents, adhesives, adhesives and the like.

In the elastomeric composition, when the content of the elastomeric polymer is less than 30% by weight, the elasticity and adhesive strength of the rubber compound layer 230 is lowered. When the content of the elastomeric polymer exceeds 70% by weight and the content of the additive is less than 30% by weight, the processability is lowered when the rubber compound layer 230 is formed using the rubber compound solution. Therefore, in the elastomeric composition, the content of the elastomeric polymer is adjusted in the range of 30 to 70% by weight, and the content of the additive is adjusted in the range of 30 to 70% by weight.

The type of the solvent is not particularly limited as long as it is a substance capable of dissolving the elastomeric polymer. In particular, the substance capable of dissolving the rubber component may be used as a solvent according to one embodiment of the present invention. For example, the solvent may include at least one selected from toluene, naphtha, methanol, xylene and tetrahydrofuran. Toluene, naphtha, methanol, xylene and tetrahydrofuran may be used alone or in combination.

When the concentration of the elastomeric composition in the rubber compound solution is less than 10% by weight, the thickness of the rubber compound layer 230 becomes thin, and the tackiness and adhesive strength may not be properly expressed. This causes problems such as a decrease in tire manufacture characteristics and a tire defect during driving.

Meanwhile, when the concentration of the elastomeric composition in the rubber compound solution exceeds 40% by weight, the stirring property is lowered due to an increase in viscosity, and the dispersibility of the rubber compound solution is lowered, whereby the coating property is lowered and the coating thickness can be non-uniform.

The rubber compound layer 230 may include at least one selected from natural rubber (NR), styrene butadiene rubber (SBR), butadiene rubber (BR), chloroprene rubber (CR), isobutylene rubber (IBR), isoprene rubber (IR), nitrile rubber (NBR), butyl rubber and neoprene rubber.

The rubber compound layer 230 has a thickness t1 of 5 $\mu$m to 200 $\mu$m.

As shown in FIG. 2, the thickness t1 of the rubber compound layer 230 is measured by the distance from one surface of the rubber compound layer 230 in contact with the adhesive layer 220 to the other surface of the rubber compound layer 230 located opposite to the adhesive layer 220.

When the thickness t1 of the rubber compound layer 230 is less than 5 $\mu$m, the rubber compound layer 230 does not have sufficient tackiness and adhesive strength, whereby the tire manufacture characteristics are deteriorated, it becomes difficult to express durability of the tire, and tire defects may occur.

When the thickness t1 of the rubber compound layer 230 exceeds 200$\mu$m, the thickness of the rubber reinforcing material 201 is increased and thus the thickness of the tire may be increased. In particular, when the thickness t1 of the rubber compound layer 230 exceeds 200$\mu$m, bubbles are generated in the rubber compound layer 230 in the process of the volatilization of the solvent, making it difficult for the rubber reinforcing material 201 to have a uniform thickness. When this is applied to a tire, an air pocket occurs in the tire, which results in a decrease in the tire quality and an increase of the defective rate. In addition, there is a disadvantage that it is necessary to perform the coating operation several times in order to form a thick rubber compound layer 230, which is inefficient in the process and may result in a decrease in tire quality and a defective rate.

More specifically, the rubber compound layer 230 may have a thickness t1 of 5$\mu$m to 30$\mu$m.

In the conventional rubber reinforcing material, the rubber substrate is rolled on the fiber substrates 210 and 110 to form a rubber layer corresponding to the rubber compound layer 230 of the present invention. Since the rubber substrate has a predetermined thickness, the rubber layer of the rubber reinforcing material formed according to the conventional method generally has a thickness of 1000$\mu$m or more and a thickness of at least 800$\mu$m or more.

Meanwhile, since the rubber compound layer 230 according to another embodiment of the present invention is formed by dipping or coating a rubber compound solution, it may have a thin thickness t1 of 200 $\mu$m or less. According to one embodiment of the present invention, since the rubber compound layer 230 has a thin thickness t1 of 5 $\mu$m to 200$\mu$m, the overall thickness of the rubber reinforcing material 201 is thinned. Consequently, the thickness of the tire using such rubber reinforcing material 201 can be thinned.

The rubber reinforcing material 201 according to another embodiment of the present invention has excellent tackiness. The tackiness can be expressed as a tacky strength. For example, the rubber reinforcing material 201 according to another embodiment of the present invention may have a tacky strength of 3 N/inch or more. Here, the tacky strength is a value measured by a PEEL test method (Cross Head Speed is 125 mm/min) using an Instron Clampe (Grip, CAT. No. 2712-041).

When the tacky strength of the rubber reinforcing material 201 is 3N/inch or more, the rubber reinforcing material adheres to the rubber without causing a phenomenon that flows down during the tire manufacturing process, and so the tire manufacturing process may be stably performed. If the tacky strength of the rubber reinforcing material 201 is less than 3N/inch, a defect may occur due to the flowing down during the tire manufacturing process. In addition, when the tacky strength of the rubber reinforcing material 201 is less than 3N/inch, an air pocket may be generated at the time of manufacturing green tires, thereby increasing a defective rate of the tire.

Meanwhile, if the adhesive strength of the rubber reinforcing material 201 is excessively high, inconvenience may occur during the storage process of the rubber reinforcing material 201 due to excessive tackiness, and due to the excessive tackiness between the rubber reinforcing materials 201 in the manufacture of tires, tension is unevenly applied during rewinding and so the processability may be reduced. Therefore, the tacky strength of the rubber reinforcing material 201 can be adjusted to the range of 40N/inch or less. More specifically, it may be adjusted to a range of 17 N/inch or less. According to another embodiment of the present invention, the tacky strength of the rubber reinforcing material 201 may be adjusted, for example, in the range of 4 N/inch to 17 N/inch. Alternatively, the tacky strength of the rubber reinforcing material 201 according to another embodiment of the present invention may be adjusted in the range of 5 N/inch to 17 N/inch.

The rubber reinforcing material 201 according to another embodiment of the present invention may be applied to a cap ply 90, a belt 50, or a carcass 70 of the tire 101.

FIG. 4 is a schematic cross-sectional view of a rubber reinforcing material 301 according to another embodiment of the present invention.

The rubber reinforcing material 301 of FIG. 4 illustrates that the plied twisted yarn 110 is used as the fiber substrate. The plied twisted yarn 110 may be formed such that two or more primarily-twisted yarns 111 and 112 are secondarily-twisted as described above. However, one embodiment of the present invention is not limited thereto, and other plied twisted yarns known in the art may be used to manufacture the rubber reinforcing material 301.

The rubber reinforcing material 301 according to another embodiment of the present invention includes a plied twisted yarn 110, which is a fiber substrate, an adhesive layer 220 disposed on the plied twisted yarn 110, and a rubber compound layer 230 disposed on the adhesive layer 220.

Since the plied twisted yarn 110, the adhesive layer 220 and the rubber compound layer 230 have already been described, a detailed description thereof will be omitted to avoid duplication.

Hereinafter, a method for producing the rubber reinforcing materials 201 and 301 according to another embodiment of the present invention will be described.

The method for producing rubber reinforcing materials 201 and 301 according to one embodiment of the present invention includes a step of preparing textile substrates 210 and 110, a step of forming an adhesive layer 220 on the textile substrates 210 and 110, and a step of applying a rubber compound solution onto the adhesive layer 220 and performing heat treatment to form a rubber compound layer 230 on the adhesive layer 220.

The fiber substrates 210 and 110 may be either a fiber yarn or a textile substrate 210. The plied twisted yarn 110 may be used as the fiber yarn 210. The textile substrate 210 is formed by weaving fiber yarns. Thus, the step of preparing textile substrates may include a step of weaving the fiber yarns to produce the textile substrate 210.

The plied yarn 110 used as the fiber yarn may include a hybrid plied twisted yarn formed such that two or more primarily-twisted yarns not identical to each other are secondarily twisted.

According to another embodiment of the present invention, the hybrid plied twisted yarn may include a nylon primarily-twisted yarn and an aramid primarily-twisted yarn. The nylon primarily-twisted yarn may have a fineness of 300 to 2000 de, and more specifically, it may have a fineness of 1100 to 1400 de. The aramid primarily-twisted yarn may have a fineness of 500 to 3000 de, more specifically it may have a fineness of 1300 to 1700 de.

For example, the primary twisting and secondary twisting were performed simultaneously with a nylon filament of 300 to 2000 de as a first primarily-twisted yarn 111 and an aramid filament of 500 to 3000 de as a second primarily-twisted yarn 112 by means of the Cable Corder twister to produce a plied twisted yarn 110, wherein the primary twisting was performed in the counterclockwise direction and the secondary twisting was performed in the clockwise direction. The plied twisted yarn may have a twist number of 150 to 500 TPM.

The adhesive layer 220 is formed on the fiber substrates 210 and 110.

The adhesive layer 220 may be formed by an adhesive coating solution containing a resorcinol-formaldehyde-latex (RFL) and a solvent. The step of forming of the adhesive layer 220 may include a step of coating an adhesive coating solution onto the fiber substrates 210 and 110 and performing a heat treatment.

The method of coating the adhesive coating solution onto the fiber substrates 210 and 110 is not particularly limited. For example, the adhesive coating solution may be applied onto the fiber substrates 210 and 110 by dipping the fiber substrates 210 and 110 in the adhesive coating solution. For example, a dipping process may be performed by passing the fiber substrates 210 and 110 through the adhesive coating solution. The dipping process may be performed with a dipping machine in which tension, dipping time and temperature can be adjusted.

The adhesive coating solution may be applied onto the fiber bases 210 and 110 by either coating using a blade or a coater or spraying using an injector in addition to the dipping process. The step of forming the adhesive layer 220 may further include a step of applying an adhesive coating solution on the fiber substrates 210 and 110 and performing a heat treatment at 130 to 170°C for 80 to 120 seconds. The heat treatment may be performed with a heat treatment apparatus. The resorcinol-formaldehyde-latex (RFL) layer 222 is cured and fixed by the heat treatment to complete the adhesive layer 220. By this heat treatment, the adhesive layer 220 may be more stably formed.

After the adhesive layer 220 is formed, a rubber compound solution is applied onto the adhesive layer 220 and heat treated to form the rubber compound layer 230 on the adhesive layer 220.

The rubber compound solution includes an elastomeric composition and a solvent. Specifically, the rubber compound solution includes 10 to 40% by weight of the elastomeric composition and 70 to 90% by weight of the solvent. Considering the volatilization of the solvent contained in the rubber compound solution, the rubber compound solution may include 10 to 30% by weight of the elastomeric composition and 70 to 90% by weight of the solvent on the basis of production. In this case, when the solvent is volatilized after preparing the rubber compound solution, the content of the elastomeric polymer included in the rubber compound solution may be 10 to 40% by weight.

When the concentration of the elastomeric composition in the rubber compound solution is less than 10% by weight, the thickness t1 of the rubber compound layer 230 becomes thin and the tackiness and adhesive strength may not be properly expressed. This causes problems such as a decrease in tire manufacture characteristics and a tire defect during driving. On the other hand, when the concentration of the elastomeric composition in the rubber compound solution exceeds 40% by weight, the stirring property of the adhesive solution is lowered due to the increase in viscosity, and the dispersibility of the rubber compound solution is lowered, whereby the coating property is lowered and the coating thickness can be non-uniform.

Therefore, in the rubber compound solution, the concentration of the elastomeric composition is adjusted in the range of 10 to 40% by weight.

The elastomeric composition may include 30 to 70% by weight of the elastomeric polymer and 30 to 70% by weight of the additive.

For example, the elastomeric composition may include at least one elastomer selected from natural rubber (NR), styrene butadiene rubber (SBR), butadiene rubber (BR), chloroprene rubber (CR), isobutylene rubber (IBR), isoprene rubber (IR), nitrile rubber (NBR), butyl rubber and neoprene rubber. The additives may include additives used for forming the rubber compound, for example, carbon black, paraoil, zinc oxide, stearic acid, anti-aging agents, sulfur, vulcanization accelerators, active agents, adhesives, adhesives and the like.

The solvent may include at least one selected from toluene, naphtha, methanol, xylene, and tetrahydrofuran, They may be used alone or in combination.

The method of applying the rubber compound solution on the adhesive layer 220 is not particularly limited, and a known coating method may be applied.

For example, in order to form the rubber compound layer 230, the fiber substrates 210 and 110 coated with the adhesive layer 220 may be dipped in the rubber compound solution. By this dipping, a rubber compound solution is applied onto the adhesive layer 220.

In addition, the rubber compound solution may be applied onto the adhesive layer 220 by a comma coating using a comma coater. At this time, the coating may be performed at a temperature condition of 80 to 100 °C. Such temperature corresponds to the lowest temperature at which the solvent can be volatilized.

However, another embodiment of the present invention is not limited thereto, and the rubber compound solution may be coated by a gravure coating method, a micro gravure coating method, or the like.

After coating the rubber compound solution, the coated rubber compound solution may be subjected to heat treatment. That is, the step of forming the rubber compound layer 230 may include a step of applying a rubber compound solution on the adhesive layer 220 and then performing heat treatment.

The heat treatment may be performed by a heat treatment apparatus. For the heat treatment, heat may be applied for 30 to 150 seconds at a temperature of 80 to 160 °C. As a result, the rubber compound layer 230 is formed on the adhesive layer 220.

Through this process, the rubber reinforcing materials 201 and 301 are produced, and the produced rubber reinforcing materials 201 and 301 are wound around the winder.

In this case, the rubber compound layer 230 may have a thickness t1 of 5 $\mu$m to 200 $\mu$m. The thickness t1 of the rubber compound layer 230 is less than 5 $\mu$m, and the rubber compound layer 230 does not have sufficient tackiness and adhesive strength, and so tire manufacture characteristics are degraded and tire defects may occur. When the thickness t1 of the rubber compound layer 230 exceeds 200 $\mu$m, the thickness of the rubber reinforcing material 201 may be increased, resulting in an increase in the thickness of the tire.

More specifically, the rubber compound layer 230 may have a thickness t1 of 5 $\mu$m to 30 $\mu$m.

Next, a slitting step may optionally be performed.

The method may further include a step of cutting the rubber reinforcing material 201 made in a plate shape so as to meet the purpose of use or as necessary. This cutting is called slitting. The slitting step may be omitted. The method of cutting or slitting is not particularly limited.

At the request of the user or customer, for example, the rubber reinforcing material 201 is cut using a conventional cutter knife or heating knife by using a width of 3 mm to 50 mm or limiting the number of warp yarns, thereby performing slitting. According to another embodiment of the present invention, the cut rubber reinforcing material 201 may have a width of 3mm to 50mm.

Through such a process, the rubber reinforcing materials 201 and 301 according to the embodiments of the present invention is completed.

The rubber reinforcing materials 201 and 301 manufactured in this manner may be used, for example, as a cap ply 90 of the tire 101.

The rubber reinforcing material 201 according to one embodiment of the present invention has excellent adhesion to the rubber, and it can be easily attached to the rubber without a conventional rolling process. When such a rubber reinforcing material 201 is used as the cap ply 90, the rolling process can be omitted and thus, the manufacturing process of the tire can be simplified. Moreover, the tackiness of the cap ply 90 is greatly increased, and the air pocket is reduced at the time of manufacturing green tires, thereby reducing the defective rate of the tire. In addition, a thin and light tire 101 may be made because the rolling process is not performed.

Such rubber reinforcing materials 201 and 301 may be applied to at least one of a belt and a carcass.

Hereinafter, the operation and effects of the invention will be described in more detail by way of specific production examples and comparative examples. However, these production examples and comparative examples are presented for illustrative purposes only and the scope of the invention is not limited thereby.

<Production Example 1>

(1) Preparation of textile substrate: nylon/aramid plied twisted yarn woven fabric

The primary twisting and secondary twisting were performed simultaneously with a nylon filament (first primarily-twisted yarn) of 1260 de and an aramid filament (second primarily-twisted yarn) of 1500 de by means of a Cable Corder twister to produce a plied twisted yarn 110, wherein the primary twisting was performed in the counterclockwise direction and the secondary twisting was performed in the clockwise direction. The twist number of the plied twisted yarn 110 was 300 TPM.

A fabric was woven by using the plied twisted yarn 110 prepared in this manner as a warp yarn and using a cotton yarn as a weft yarn, and thereby, a textile substrate 210 in the form of a fabric was prepared. The textile substrate 210 thus prepared was used as the fiber substrate.

(2) Formation of Adhesive Layer

The textile substrate 210 was dipped in the adhesive coating solution, and then heat-treated to complete the adhesive layer 220. At this time, the adhesive coating solution contains 15 wt% of resorcinol-formaldehyde-latex (RFL) and 85 wt% of a solvent (water, $H_2O$) based on the total weight. In addition, the adhesive coating solution applied onto the textile substrate 210 was dried by heat treatment at 150°C for 100 seconds, and again heat-treated at 240°C for 100 seconds.

(3) Formation of Rubber compound layer

First, an elastomeric composition including 60 parts by weight of carbon black, 20 parts by weight of paraoil, 3 parts by weight of zinc oxide, 2 parts by weight of stearic acid, 2 parts by weight of anti-aging agent (RUBBER ANTIOXIDANTS, BHT), 2 parts by weight of sulfur and 1 part by weight of vulcanization accelerator (ZnBX) based on 100 parts by weight of styrene butadiene rubber (SBR) was produced.

Next, a mixed solvent of toluene and tetrahydrofuran in a weight ratio of 20:80 was prepared.

Next, the elastomeric composition was dispersed in a mixed solvent at a concentration of 13% to produce a rubber compound solution.

The rubber compound solution was applied onto the coating layer 230 formed on the textile substrate 210 using a comma coater, and the solvent was volatilized at a temperature of 80°C to form the rubber compound layer 230. Here, the thickness t1 of the rubber compound layer 230 was 13 $\mu$m. Thereby, the rubber reinforcing material 201 was produced.

(4) Production of rubber reinforcing materials for cap ply that has been cut to the standard

The rubber reinforcing material 201 thus prepared was cut to a width of 10 mm to produce a rubber reinforcing material for the cap ply 90. Cutter Knife was used for cutting.

(5) Tire manufacturing

Tires of the 205/55R16 size were made with the cut rubber reinforcing material. For tire manufacturing, the body plies and steel cord belts containing 1300De/2ply HMLS tire cords were used.

Specifically, the body ply rubber was laminated on the inner liner rubber, the bead wire and the belt part were laminated, and then the above prepared rubber reinforcing material was added. Rubber layers for forming a tread part, a shoulder part and a side wall part were sequentially formed, thereby producing a green tire. The green tire thus produced was put in a vulcanization mold and vulcanized at 170°C for 15 minutes to manufacture a tire.

<Production Example 2>

A tire reinforcing material 210 and a tire were manufactured in the same manner as in Production Example 1, except that in the formation of the rubber compound layer 230, a rubber compound solution was prepared by dispersing the elastomeric composition at a concentration of 17% in a mixed solvent, and the thickness t1 of the rubber compound layer 230 was 20 $\mu$m.

<Production Example 3>

A tire reinforcing material 210 and a tire were manufactured in the same manner as in Production Example 1, except that in the formation of the rubber compound layer 230, a rubber compound solution was prepared by dispersing the elastomeric composition at a concentration of 25% in a mixed solvent, and the thickness t1 of the rubber compound layer 230 was 36 $\mu$m.

<Comparative Example 1>

A tire reinforcing material 210 and a tire were manufactured in the same manner as in Production Example 1, except that instead of forming the rubber compound layer 230 using the rubber compound solution, a rubber having a thickness of 1.6 mm was disposed on the adhesive layer 220 on the textile substrate 210 and rolled to form a rubber reinforcing material.

<Comparative Example 2>

A tire reinforcing material 210 and a tire were manufactured in the same manner as in Production Example 1, except that the process of forming the rubber compound layer 230 was omitted.

<Comparative Example 3>

A tire reinforcing material 210 and a tire were manufactured in the same manner as in Production Example 1, except that in the formation of the rubber compound layer 230, a rubber compound solution was prepared by dispersing the elastomeric composition at a concentration of 5% in a mixed solvent, and the thickness t1 of the rubber compound layer 230 was 4.5 $\mu$m.

<Comparative Example 4>

A tire reinforcing material 210 and a tire were manufactured in the same manner as in Production Example 1, except that in the formation of the rubber compound layer 230, a rubber compound solution was prepared by dispersing the elastomeric composition at a concentration of 45% in a mixed solvent, and the thickness t1 of the rubber compound layer 230 was 210 $\mu$m.

<Production Example 4>

(1) Preparation of textile substrate: nylon plain woven fabric

A raw fabric was woven using nylon filaments having a total fineness of 630de. At this time, the weaving density was set to a warp density of 55 th/inch and a weft density 10th/inch to prepare a textile substrate 210 in the form of a fabric.
Subsequently, (2) formation of adhesive layer, (3) formation of rubber compound layer(thickness of rubber compound layer: 10$\mu$m), (4) production of rubber reinforcing materials for cap ply that has been cut to the standard, and (5) Tire manufacturing were performed in the same manner as in Production Example 1 to manufacture a tire reinforcing material 210 and a tire according to Production Example 4.

<Production Example 5>

A tire reinforcing material 210 and a tire were manufactured in the same manner as in Production Example 4, except that in the formation of the rubber compound layer 230, a rubber compound solution was prepared by dispersing the elastomeric composition at a concentration of 17% in a mixed solvent, and the thickness t1 of the rubber compound layer 230 was 18 $\mu$m.

<Production Example 6>

A tire reinforcing material 210 and a tire were manufactured in the same manner as in Production Example 4, except that in the formation of the rubber compound layer 230, a rubber compound solution was prepared by dispersing the elastomeric composition at a concentration of 25% in a mixed solvent, and the thickness t1 of the rubber compound layer 230 was 23 $\mu$m.

<Production Example 7>

A tire reinforcing material 210 and a tire were manufactured in the same manner as in Production Example 4, except that in the formation of the rubber compound layer 230, a rubber compound solution was prepared by dispersing the elastomeric composition at a concentration of 35% in a mixed solvent, and the thickness t1 of the rubber compound layer 230 was 30 $\mu$m.

<Comparative Example 5>

A tire reinforcing material 210 and a tire were manufactured in the same manner as in Production Example 4, except that instead of forming the rubber compound layer 230 using the rubber compound solution, a rubber having a thickness of 1.6 mm was disposed on the adhesive layer 220 on the textile substrate 210 and rolled to form a rubber reinforcing material.

<Comparative Example 6>

A tire reinforcing material 210 and a tire were manufactured in the same manner as in Production Example 4, except that the process of forming the rubber compound layer 230 was omitted.

<Comparative Example 7>

A tire reinforcing material 210 and a tire were manufactured in the same manner as in Production Example 4, except that in the formation of the rubber compound layer 230, a rubber compound solution was prepared by dispersing the elastomeric composition at a concentration of 5% in a mixed solvent, and the thickness t1 of the rubber compound layer 230 was 4 $\mu$m.

<Comparative Example 8>

A tire reinforcing material 210 and a tire were manufactured in the same manner as in Production Example 4, except that in the formation of the rubber compound layer 230, a rubber compound solution was prepared by dispersing the elastomeric composition at a concentration of 40% in a mixed solvent.

<Test Example>

(1) Measurement of thickness

The thickness of the rubber compound layer 230 produced in Production Examples 1-7 and Comparative Examples 1-8 was measured using Mitutoyo Vernier Calipers.

(2) Tacky strength test

The rubber reinforcing materials produced in Production Example 1-3 and Comparative Example 1-4 were laminated on the unvulcanized rubber (thickness: 1.3 mm) used for the carcass layer, and the rubber reinforcing materials produced in Production Examples 4 to 7 and Comparative Examples 5 to 8 were laminated on the unvulcanized rubber (thickness: 1.3 mm) used for the belt layer. At this time, in order to compress the unvulcanized rubber and the rubber reinforcing material, a rubber reinforcing material was pressed three times using a metal cylindrical weight with a load of 5 kgf to produce a pressure-sensitive adhesive layer composite, and then cut to produce a specimen having a width of 1 inch. Next, a Scotch tape (TM) was attached to the exposed surface of the rubber reinforcing material produced in Production Examples 1-7 and Comparative Examples 1-8 to prevent the specimen from being stretched, and then the tacky strength of the rubber reinforcing materials produced in Production Examples 1 to 7 and Comparative Example 1 to 8 was measured by the PEEL test method using Instron Clampe (Grip, CAT.No. 2712-041). At this time, the cross head speed was 125 mm/min. the tacky strength was expressed as "N/inch" units.

(3) Adhesive strength (PEEL) test

In accordance with ASTM D4393-American Society for Testing and Materials Testing Standard, the adhesive peel strength of the rubber reinforcing materials produced in Production Examples 1 to 7 and Comparative Examples 1 to 8 on the carcass layer of the tire was measured. Specifically, 1.6 mm thick rubber sheet, cord paper, each rubber reinforcing material produced in Production Examples 1 to 7 and Comparative Examples 1 to 8, 1.6 mm thick rubber sheet, cord paper, and 1.6 mm thick rubber sheet were sequentially stacked to prepare a sample, which was then vulcanized at 160°C under a pressure of 60 kg/cm$^2$ for 20 minutes. Next, the vulcanized sample was cut to prepare a specimen having a width of 1 inch. The specimen thus prepared was subjected to a peel test at a rate of 125 mm/min at 25°C using a universal testing machine (Instron Co., Ltd.), and then the adhesive peel strength of the rubber reinforcing materials produced in Production Examples 1 to 7 and Comparative Examples 1 to 8 on the carcass layer was measured. At this time, the average value of the load generated at the time of peeling was calculated by an adhesive strength. The adhesive strength was expressed in units of "N/inch".

(4) Weight index of rubber reinforcing material

The weights of 20 rubber reinforcing materials produced in Production Examples 1 to 7 and Comparative Examples 1 to 8, respectively, were measured, and the average values were obtained and then compared.

(5) Tire weight index

Twenty tires were manufactured in Production Example 1 to 7 and Comparative Example 1 to 8, respectively. The weight of the tire thus manufactured was measured and averaged.

(6) Tire manufacture defect rate

The incidence of defects during the manufacturing process according to Production Examples 1 to 7 and Comparative Examples 1 to 8 was investigated. Because of the characteristics of the tire manufacturing process, when the rubber reinforcing materials maintains the adhesive strength above a certain level, the rubber reinforcement can adhere to the rubber without causing a phenomenon of flowing to proceed up to the tire manufacturing process. If the rubber reinforcing materials does not have an adhesive strength above a certain level, defects due to flowing down during tire manufacturing can occur. In addition, if air pockets occur in the rubber compound layer, interfacial separation may occur in the rubber compound layer, resulting in tire defects.

Twenty tires were produced for each of Production Examples 1 to 7 and Comparative Examples 1 to8, and the presence or absence of defects was confirmed, and a defective rate during tire manufacturing was obtained according to the following Equation 1.

[Equation 1]

Tire manufacturing defect rate (%) = [(Number of good tires) / (20, Number of tires evaluated)] x 100

The results measured above are shown in Tables 1 and 2 below.

[Table 1]

| Category | Production Example 1 | Production Example 2 | Production Example 3 | Comparative Example 1 | Comparative Example 2 | Comparative Example 3 | Comparative Example 4 |
|---|---|---|---|---|---|---|---|
| Concentration of elastomeric composition (wt%) | 13 | 17 | 25 | - | - | 5 | 45 |
| Solvent concentration (wt%) | 87 | 83 | 75 | - | - | 95 | 55 |
| Tacky strength (N/inch) | 15.77 | 16.55 | 16.38 | 17.04 | 0 | 7.79 | 40.03 |
| Adhesive strength (N/inch) | 317.1 | 324.7 | 323.0 | 317.5 | 314.3 | 316.2 | 328.3 |
| Thickness of rubber compound layer($\mu$m) | 13 | 20 | 36 | 800 | 0 | 4.5 | 210 |
| Weight of rubber reinforcing material (g) | 128.5 | 133.8 | 143.0 | 692.4 | 118.4 | 124.1 | 288.0 |
| Weight of tire(kg) | 10.36 | 10.41 | 10.35 | 10.80 | 10.33 | 10.38 | 10.51 |
| Defective rate(%) | 10 | 5 | 5 | 5 | 85 | 50 | 45 |

[Table 2]

| Category | Production Example 4 | Production Example 5 | Production Example 6 | Production Example 7 | Comparative Example 5 | Comparative Example 6 | Comparative Example 7 | Comparative Example 8 |
|---|---|---|---|---|---|---|---|---|
| Concentration of elastomeric composition (wt%) | 12 | 17 | 25 | 35 | - | - | 5 | 45 |
| Solvent concentration (wt%) | 87 | 83 | 75 | 65 | - | - | 95 | 60 |
| Tacky strength (N/inch) | 5.05 | 5.41 | 6.00 | 5.92 | 6.11 | 1.80 | 2.34 | 6.27 |
| Adhesive strength(N/inch) | 212.0 | 215.6 | 220.2 | 216.8 | 230.3 | 213.8 | 210.5 | 200.8 |
| Thickness of rubber compound layer($\mu$m) | 10 | 18 | 23 | 30 | 800 | 0 | 4 | 180-230 |
| Weight of rubber reinforcing material (g) | 104.5 | 115.0 | 122.5 | 125.5 | 512.5 | 94.0 | 99.0 | 251.5 |
| Weight of tire (kg) | 9.34 | 9.35 | 9.36 | 9.36 | 9.75 | 9.33 | 9.34 | 9.49 |
| Defective rate(%) | 10 | 5 | 5 | 10 | 5 | 85 | 50 | 55 |

Referring to Table 1, it can be seen that in the case of Production Examples 1 to 3 according to the present invention, the thickness of the rubber compound layer 230 is reduced by 90% or more compared with Comparative Example 1 according to the conventional method, and despite a reduction in the thickness of the rubber compound layer 230, they have excellent tacky strength and adhesive strength of equivalent level or higher. In addition, it can be confirmed that the weight of the tire according to Production Examples 1 to 3 is 0.39 kg to 0.45 kg lighter than the tire according to Comparative Example 1.

On the other hand, the rubber reinforcing materials according to Production Examples 1 to 3 have excellent tacky strength as compared to the rubber reinforcing materials of Comparative Examples 2 and 3, and thus, the defective rate during tire manufacturing was greatly reduced. Further, it can be confirmed that during the tire manufacturing, the occurrence of air pockets is reduced compared with Comparative Example 4, thereby reducing a defective rata under tire manufacturing. In the case of Comparative Example 4, it shows a high defect rate due to the occurrence of the air pocket, and so has a larger weight compared to Production Examples 1 to 3.

Referring to Table 2, it can be seen that in the case of Production Examples 4 to 7 according to the present invention, the thickness of the rubber compound layer 230 is reduced by 95% or more as compared with Comparative Example 5 according to the conventional method, and despite a reduction in the thickness of the rubber compound layer 230, it has an equivalent level of tacky adhesion and adhesive strength. Further, it can be confirmed that the weight of the tire according to Production Examples 4 to 7 is 0.39kg to 0.41kg lighter than the tire according to Comparative Example 5.

On the other hand, the rubber reinforcing materials according to Production Examples 4 to 7 have excellent tacky strength as compared to the rubber reinforcing materials of Comparative Examples 6 and 7, so that the defective rate during tire manufacturing was greatly reduced. In the case of Comparative Example 6, since the rubber compound layer 230 is not formed, it has a low tacky strength. In the case of Comparative Example 7, the rubber compound layer 230 is made from a rubber compound solution containing a low concentration of the elastomeric composition, and the rubber compound layer 230 has a thin thickness of 4 $\mu$m and has low tacky strength.

In addition, it can be confirmed that in the case of Comparative Example 8, the rubber compound layer 230 is made from a rubber compound solution containing a high concentration of the elastomeric composition, and the thickness of the rubber compound layer is non-uniform, ranging from 180 to 230 $\mu$m, the occurrence of air pockets was increased during tire manufacturing as compared with the case in which the reinforcing materials produced in Production Examples 4 to 7 were used, and a defective rate during tire manufacturing was greatly increased.

[Explanation of Symbols]

10: tread 20: shoulder
30: Side wall 40: bead
50: belt 60: inner liner
70: carcass 80: groove
90: cap ply 101: tire
110: Plied twisted yarn
111: fist primarily-twisted yar
112: second primarily-twisted yar
201: rubber reinforcing material
210: textile substrate
220: adhesive layer
230: rubber compound layer

**Claims**

1. A rubber reinforcing material comprising:

   a fiber substrate;
   an adhesive layer disposed on the fiber substrate; and
   a rubber compound layer disposed on the adhesive layer,
   wherein the rubber compound layer has a thickness of 5$\mu$m to 200$\mu$m.

2. The rubber reinforcing material according to claim 1,

wherein the rubber compound layer has a thickness of 5$\mu$m to 30$\mu$m.

3. The rubber reinforcing material according to claim 1,
wherein the rubber compound layer is formed from a rubber compound solution, and
the rubber compound solution contains 10 to 40% by weight of an elastomeric composition and 60 to 90% by weight of a solvent based on the total weight of the rubber compound solution.

4. The rubber reinforcing material according to claim 1,
wherein the elastomeric composition includes at least one elastomeric polymer selected from natural rubber, styrene butadiene rubber, butadiene rubber, chloroprene rubber, isobutylene rubber, isoprene rubber, nitrile rubber, butyl rubber and neoprene rubber.

5. The rubber reinforcing material according to claim 1,
wherein the solvent includes at least one selected from toluene, naphtha, methanol, xylene and tetrahydrofuran.

6. The rubber reinforcing material according to claim 1,
wherein the adhesive layer includes resorcinol-formaldehyde-latex (RFL).

7. The rubber reinforcing material according to claim 1,
wherein the fiber substrate includes at least one of a fiber yarn and a textile substrate.

8. The rubber reinforcing material according to claim 1,
wherein the textile substrate is a fabric formed by weaving fiber yarns.

9. The rubber reinforcing material according to claim 1,
wherein it has an adhesive force of 3N/inch or more.

10. A method for producing a rubber reinforcing material comprising:

a step of preparing a textile substrate;
a step of forming an adhesive layer on the textile substrate; and
a step of applying a rubber compound solution onto the adhesive layer and performing heat treatment to form a rubber compound layer on the adhesive layer,
wherein the rubber compound solution contains 10 to 40% by weight of an elastomeric composition and 60 to 90% by weight of a solvent based on the total weight of the rubber compound solution.

11. The method for producing a rubber reinforcing material according to claim 10,
wherein the rubber compound layer has a thickness of 5 $\mu$m to 200 $\mu$m.

12. The method for producing a rubber reinforcing material according to claim 10, wherein the rubber compound layer has a thickness of 5 $\mu$m to 30 $\mu$m.

13. The method for producing a rubber reinforcing material according to claim 10,
wherein the elastomeric composition includes at least one elastomeric polymer selected from natural rubber, styrene butadiene rubber, butadiene rubber, chloroprene rubber, isobutylene rubber, isoprene rubber, nitrile rubber, butyl rubber and neoprene rubber.

14. The method for producing a rubber reinforcing material according to claim 10,
wherein the solvent includes at least one selected from toluene, naphtha, methanol, xylene and tetrahydrofuran.

15. The method for producing a rubber reinforcing material according to claim 10,
wherein the step of preparing a textile substrate includes a step of weaving fiber yarns to produce a textile substrate.

16. The method for producing a rubber reinforcing material according to claim 10,
wherein the method further includes a step of slitting after forming the rubber compound layer.

17. A tire comprising the rubber reinforcing material according to any one of claims 1 to 9.

**18.** A tire according to claim 17,
wherein the rubber reinforcing material is applied to at least one of a cap ply, a belt and a carcass.

【FIG. 1】

【FIG. 2】

【FIG. 3】

【FIG. 4】

## INTERNATIONAL SEARCH REPORT

| International application No. |
| --- |
| PCT/KR2018/007136 |

A.  CLASSIFICATION OF SUBJECT MATTER

*B32B 25/10(2006.01)i, B32B 7/12(2006.01)i, B32B 5/02(2006.01)i, B32B 37/12(2006.01)i, B32B 38/04(2006.01)i, B60C 9/20(2006.01)i, B60C 9/02(2006.01)i, B60C 9/22(2006.01)i*

According to International Patent Classification (IPC) or to both national classification and IPC

B.  FIELDS SEARCHED

Minimum documentation searched (classification system followed by classification symbols)

B32B 25/10; B29D 30/38; B32B 25/08; B32B 7/12; B60C 1/00; B60C 5/14; B60C 9/00; C08J 5/06; C09J 161/12; D06M 15/693; B32B 5/02; B32B 37/12; B32B 38/04; B60C 9/20; B60C 9/02; B60C 9/22

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: fabric, resorcinol-formaldehyde-latex, rubber, tire, thickness

C.  DOCUMENTS CONSIDERED TO BE RELEVANT

| Category* | Citation of document, with indication, where appropriate, of the relevant passages | Relevant to claim No. |
| --- | --- | --- |
| X | KR 10-2013-0043654 A (MILLIKEN & COMPANY) 30 April 2013 See paragraphs [0002], [0060], [0068]-[0072], [0130]; claims 1, 2, 14, 18, 26, 35-40; and figure 7. | 10,13-16 |
| Y | | 1-9,11,12,17,18 |
| Y | JP 11-115407 A (YOKOHAMA RUBBER CO., LTD.:THE) 27 April 1999 See claims 1-3. | 1-9,11,12,17,18 |
| A | JP 2014-506942 A (COMPANY GENERAL DE ETABLISMAN MICHELIN et al.) 20 March 2014 See the entire document. | 1-18 |
| A | KR 10-2013-0077480 A (KOLON INDUSTRIES, INC.) 09 July 2013 See the entire document. | 1-18 |
| A | WO 2014-017486 A1 (BRIDGESTONE CORPORATION) 30 January 2014 See the entire document. | 1-18 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 NOVEMBER 2018 (02.11.2018) | 02 NOVEMBER 2018 (02.11.2018) |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/007136**

| Patent document cited in search report | Publication date | Patent family member | Publication date |
|---|---|---|---|
| KR 10-2013-0043654 A | 30/04/2013 | CN 103080224 A | 01/05/2013 |
| | | CN 103080224 B | 23/07/2014 |
| | | EP 2582754 A1 | 24/04/2013 |
| | | KR 10-1513374 B1 | 17/04/2015 |
| | | US 2011-0303337 A1 | 15/12/2011 |
| | | US 2011-0305829 A1 | 15/12/2011 |
| | | US 2014-0116596 A1 | 01/05/2014 |
| | | US 2015-0107744 A1 | 23/04/2015 |
| | | US 8651157 B2 | 18/02/2014 |
| | | WO 2012-005751 A1 | 12/01/2012 |
| JP 11-115407 A | 27/04/1999 | EP 0943656 A1 | 22/09/1999 |
| | | EP 2392620 A1 | 07/12/2011 |
| | | JP 11-100463 A | 13/04/1999 |
| | | JP 11-115406 A | 27/04/1999 |
| | | JP 11-116735 A | 27/04/1999 |
| | | JP 11-123907 A | 11/05/1999 |
| | | JP 11-124471 A | 11/05/1999 |
| | | JP 11-147402 A | 02/06/1999 |
| | | JP 11-208208 A | 03/08/1999 |
| | | JP 3960669 B2 | 15/08/2007 |
| | | JP 3992333 B2 | 17/10/2007 |
| | | JP 4020480 B2 | 12/12/2007 |
| | | JP 4090096 B2 | 28/05/2008 |
| | | KR 10-0327082 B1 | 06/03/2002 |
| | | KR 10-2000-0069191 A | 25/11/2000 |
| | | US 2003-0062104 A1 | 03/04/2003 |
| | | US 2003-0062105 A1 | 03/04/2003 |
| | | US 2003-0062106 A1 | 03/04/2003 |
| | | US 6397913 B1 | 04/06/2002 |
| | | WO 99-16823 A1 | 08/04/1999 |
| JP 2014-506942 A | 20/03/2014 | CN 103348059 A | 09/10/2013 |
| | | CN 103348059 B | 29/10/2014 |
| | | EP 2670905 A1 | 11/12/2013 |
| | | EP 2670905 B1 | 02/09/2015 |
| | | FR 2971266 A1 | 10/08/2012 |
| | | FR 2971266 B1 | 27/06/2014 |
| | | JP 5999451 B2 | 05/10/2016 |
| | | US 2014-0051312 A1 | 20/02/2014 |
| | | WO 2012-104279 A1 | 09/08/2012 |
| KR 10-2013-0077480 A | 09/07/2013 | KR 10-1604276 | 18/03/2016 |
| WO 2014-017486 A1 | 30/01/2014 | CN 104507707 A | 08/04/2015 |
| | | CN 104507707 B | 25/05/2018 |
| | | EP 2878457 A1 | 03/06/2015 |
| | | EP 2878457 A4 | 23/12/2015 |
| | | JP 6338248 B2 | 06/06/2018 |

Form PCT/ISA/210 (patent family annex) (January 2015)

INTERNATIONAL SEARCH REPORT
Information on patent family members

International application No.

**PCT/KR2018/007136**

| Patent document cited in search report | Publication date | Patent family member | Publication date |
|---|---|---|---|
| | | US 2015-0183270 A1 | 02/07/2015 |
| | | WO 2014-017486 A1 | 30/01/2014 |

Form PCT/ISA/210 (patent family annex) (January 2015)